# EUROPEAN PATENT APPLICATION

(11) **EP 4 557 419 A1**
(43) Date of publication of application: **21.05.2025**
(21) Application number: 24212814.8
(22) Date of filing: 13.11.2024
(51) Int. Cl.: H01M 10/04, H01M 10/0525, H01M 50/529, H01M 50/533, H01M 50/54, H01M 50/547, H01M 50/557, H01M 50/566

(54) **SECONDARY BATTERY**

(30) Priority: 14.11.2023 KR 20230157333; 29.04.2024 KR 20240056848
(71) Applicant: SK On Co., Ltd., Seoul 03161 (KR)
(72) Inventor: KWAK, Seung Ho, 34124 Daejeon (KR); BYUN, Jae Gyu, 34124 Daejeon (KR)
(74) Representative: Stolmár & Partner Patentanwälte PartG mbB

(57) **Abstract**

A secondary battery includes a first electrode assembly including a first electrode tab that includes a plurality of first uncoated portions bent in a first direction, a second electrode assembly stacked on the first electrode assembly in the first direction and including a second electrode tab that includes a plurality of second uncoated portions bent in an opposite direction of the first direction, and a current collector plate entirely covering the first electrode tab and the second electrode tab to be electrically connected to the first electrode tab and the second electrode tab. The first electrode tab and the second electrode tab are not disposed on the same line in the first direction.

## Description

### TECHNICAL FIELD

The disclosure of this patent application relates to a secondary battery.

### BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source.

The lithium secondary battery may include an electrode assembly including a cathode, an anode and a separation layer (separator), and an electrolyte immersing the electrode assembly. The lithium secondary battery may further include an outer material, e.g., in the form of a pouch, for housing the electrode assembly and the electrolyte.

For example, the electrode assembly may be manufactured in the form of a jelly roll by winding or folding the separator, or may be manufactured in the form of a stack by stacking the separator.

A current collector plate for transferring a current may be disposed between an uncoated portion (e.g., an electrode tab) of an electrode and a terminal. For example, the current collector plate may be double-bent and bonded to the uncoated portion, or a flat-shaped current collector plate may be bonded to a folded surface of the uncoated portion while the uncoated portion is in a folded state. A volume of the flat-shaped current collector plate may occupy a relatively small space, and thus an energy density per unit volume of the secondary battery may be increased.

Recently, a method of bonding a plurality of uncoated portions and the current collector plate in a single welding is being developed. However, at least some of the plurality of uncoated portions may protrude to an outside of the current collector plate, thereby deteriorating process reliability.

### SUMMARY

According to an aspect of the present disclosure, there is provided a secondary battery having improved operational reliability and process property.

A secondary battery includes a first electrode assembly including a first electrode tab that includes a plurality of first uncoated portions bent in a first direction, a second electrode assembly stacked on the first electrode assembly in the first direction and including a second electrode tab that includes a plurality of second uncoated portions bent in an opposite direction of the first direction, and a current collector plate entirely covering the first electrode tab and the second electrode tab to be electrically connected to the first electrode tab and the second electrode tab. The first electrode tab and the second electrode tab are not disposed on the same line in the first direction.

In some embodiments, the first electrode tab and the second electrode tab may face each other in a first diagonal direction inclined with respect to the first direction.

In some embodiments, a length of each of the plurality of first uncoated portions and the plurality of second uncoated portions in the first direction may be 0.5 times or less of a width of the current collector plate.

In some embodiments, a ratio of a length of the first electrode tab in the first direction to a length of the second electrode tab in the first direction may be from 0.5 to 1.5.

In some embodiments, the number of the plurality of first uncoated portions included in the first electrode tab may be from 5 to 100, and the number of the plurality of second uncoated portions included in the second electrode tab may be 5 to 100.

In some embodiments, a width direction of the first electrode assembly and a width direction of the second electrode assembly may be the first direction, a length direction of the first electrode assembly and a length direction of the second electrode assembly may be a second direction, and a height direction of the first electrode assembly and the height direction of the second electrode assembly may be a third direction. A length of the first electrode tab in the third direction is 0.5 times or less of a length of the first electrode assembly in the third direction. A length of the second electrode tab in the third direction may be 0.5 times or less of a length of the second electrode assembly in the third direction.

In some embodiments, a width direction of the first electrode assembly and a width direction of the second electrode assembly may be the first direction, a length direction of the first electrode assembly and a length direction of the second electrode assembly may be a second direction, and a height direction of the first electrode assembly and a height direction of the second electrode assembly may be a third direction. A shortest distance between the first electrode tab and the second electrode tab may be less than or equal to a length of the first electrode tab in the third direction, and the shortest distance may be less than or equal to a length of the second electrode tab in the third direction.

In some embodiments, the first electrode assembly may include the first electrode tab protruding from one lateral portion of the first electrode assembly, and a third electrode tab including a plurality of third uncoated portions protruding from the other lateral portion of the first electrode assembly to be bent in the first direction. The second electrode assembly may include the second electrode tab protruding from one lateral portion of the second electrode assembly, and a fourth electrode tab including a plurality of fourth uncoated portions protruding from the other lateral portion of the second electrode assembly to be bent in an opposite direction of the first direction.

In some embodiments, the first electrode tab and the third electrode tab may not be disposed on the same line in a second direction perpendicular to the first direction. The second electrode tab and the fourth electrode tab may not be disposed on the same line in the second direction.

In some embodiments, the first electrode tab and the second electrode tab may face each other in a first diagonal direction inclined with respect to the first direction. The second electrode tab and the fourth electrode tab may face each other in a second diagonal direction inclined in a direction opposite to the first diagonal direction with respect to the first direction.

In some embodiments, the first electrode tab and the third electrode tab may be disposed on the same line in a second direction perpendicular to the first direction. The second electrode tab and the fourth electrode tab may be arranged on the same line in the second direction.

In some embodiments, the first electrode tab and the second electrode tab may face each other in a first diagonal direction inclined with respect to the first direction. The second electrode tab and the fourth electrode tab may face each other in the first diagonal direction.

In some embodiments, the first electrode tab and the second electrode tab may be provided as a cathode tab, and the third electrode tab and the fourth electrode tab may be provided as an anode tab.

In some embodiments, a length of each of the plurality of third uncoated portions and the plurality of fourth uncoated portions in the first direction is 0.5 times or less of a width of the current collector plate.

In some embodiments, the secondary battery may further include a welded portion at which the first electrode tab and the second electrode tab are welded to the current collector plate.

In some embodiments, the welded portion may be disposed on a surface of the current collector plate adjacent to the first electrode assembly and the second electrode assembly.

In some embodiments, the secondary battery may further include a case in which the first electrode assembly and the second electrode assembly above are accommodated, a cap plate sealing the case, and an electrode terminal coupled to the cap plate and electrically connected to the electrode tab.

According to an embodiment of the present disclosure, an additional bending process for a protruding non-coated portion may not be required, and a thickness of the secondary battery may be reduced, thereby improving process properties and structural stability.

According to an embodiment of the present disclosure, the process properties and structural stability may be improved while preventing a heat generation and damages to a secondary battery.

The lithium secondary battery of the present disclosure may be widely applied in green technology fields such as an electric vehicle, a battery charging station, a solar power generation, a wind power generation, etc., using a battery, etc. The secondary battery according to the present disclosure may be used for eco-friendly electric vehicles and hybrid vehicles to prevent a climate change by suppressing air pollution and greenhouse gas emissions. etc.

### BRIEF DESCRIPTION OF THE DRAWINGS

FIG. 1 is a schematic exploded perspective view of a secondary battery in accordance with example embodiments.
FIG. 2 is a reference view for explaining a first diagonal direction.
FIG. 3 is a schematic exploded perspective view of an electrode assembly in accordance with example embodiments.
FIG. 4 is a schematic exploded perspective view of a secondary battery in accordance with example embodiments.
FIG. 5 is a reference view for explaining a second diagonal direction.
FIG. 6 is a schematic perspective view for describing a first electrode assembly and a second electrode assembly in accordance with example embodiments.
FIG. 7 is a schematic perspective view illustrating an electrode assembly and a current collector plate in accordance with example embodiments.
FIG. 8 is a schematic cross-sectional view observed along a line A-A' of FIG. 7.
FIG. 9 is a schematic cross-sectional view observed along a line B-B' of FIG. 7.

### DETAILED DESCRIPTION OF THE EMBODIMENTS

According to embodiments of the present disclosure, a secondary battery is provided.

The terms "an upper surface", "a lateral portion", "one surface", "the other surface", "one end", "the other end", etc., herein are used relatively to distinguish different elements, positions, etc., and do not limit absolute positions.

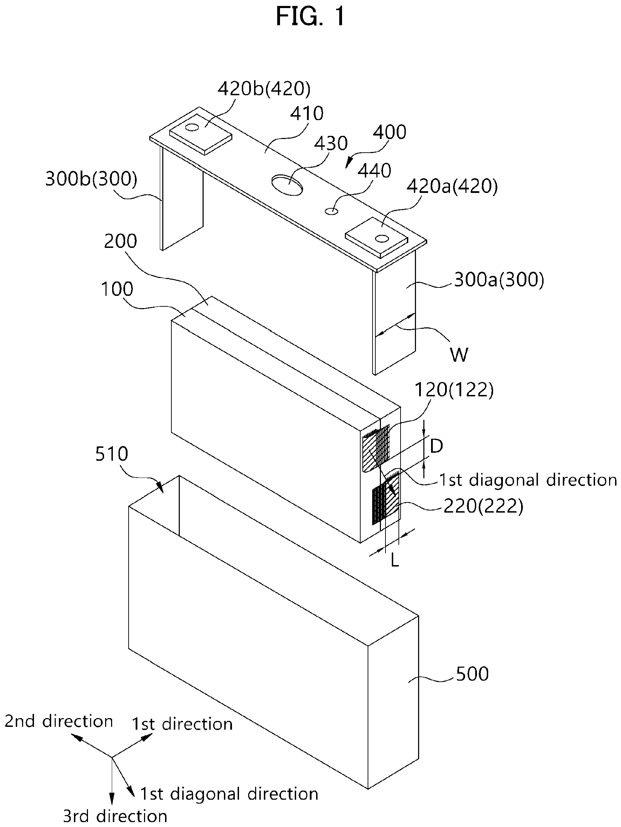

The term "first direction" as used herein may indicate a direction in which a first electrode tab 120 is bent. The first direction may indicate a direction in which a first electrode assembly 100 and a second electrode assembly 200 are stacked. The first direction may indicate a width direction of the first electrode assembly 100 and/or the second electrode assembly 200. The first direction may indicate a first direction in FIGS. 1 and 3 to 7.

The term "second direction" as used herein may indicate a length direction of the first electrode assembly 100 and/or the second electrode assembly 200. The second direction may indicate a direction from one lateral portion to the other lateral portion of the first electrode assembly 100 and/or the second electrode assembly 200. The second direction may indicate a second direction in FIGS. 1 and 3 to 7.

The term "third direction" as used herein may indicate a height direction of the first electrode assembly 100 and/or the second electrode assembly 200. The third direction may indicate a third direction in FIGS. 1 and 3 to 7. The third direction may indicate a direction perpendicular to the first direction and the second direction.

FIG. 1 is a schematic exploded perspective view of a secondary battery in accordance with example embodiments.

Referring to FIG. 1, a secondary battery includes the first electrode assembly 100 and the second electrode assembly 200.

The first electrode assembly 100 and the second electrode assembly 200 are disposed in the first direction. For example, the second electrode assembly 200 is stacked on the first electrode assembly 100 in the first direction. In an embodiment, the second electrode assembly 200 may be directly disposed on the first electrode assembly 100.

For example, the first electrode assembly 100 and the second electrode assembly 200 may be combined, fastened or assembled to be provided as a single battery unit or a single battery member.

In example embodiments, of the first electrode assembly 100 includes a first electrode tab 120 including a plurality of first uncoated portions bent in the first direction. The second electrode assembly 200 includes a second electrode tab 220 including a plurality of second uncoated portions bent in a direction opposite to the first direction.

For example, each of the first electrode assembly 100 and the second electrode assembly 200 may include a plurality of repeatedly stacked electrodes and a separator interposed between the electrodes.

Each of the plurality of electrodes includes an uncoated portion. For example, each of the electrodes included in the first electrode assembly 100 includes the first uncoated portion 122, and each of the electrodes included in the second electrode assembly 200 includes the second uncoated portion 222.

For example, the first electrode tab 120 includes a set of a plurality of the first uncoated portions 122, and the second electrode tab 220 includes a set of a plurality of the second uncoated portions 222.

In an embodiment, a plurality of the first uncoated portions 122 may not be additionally bonded or pressed to each other. In an embodiment, a plurality of the second uncoated portions 222 may not be additionally bonded or pressed to each other.

In some embodiments, the number of the plurality of the first uncoated portions 122 included in the first electrode tab 120 may be from 5 to 100, or from 10 to 50. The number of the plurality of the second uncoated portions 222 included in the second electrode tab 220 may be from 5 to 100, or from 10 to 50. In the above range, spatial efficiency may be improved while also improving power properties of the secondary battery.

In example embodiments, the first electrode tab 120 is bent in the first direction, and the second electrode tab 220 is bent in a direction opposite to the first direction. For example, a plurality of the first uncoated portions 122 may be bent in the first direction, and a plurality of the second uncoated portions 222 may be bent in the direction opposite to the first direction.

The first electrode assembly 100 and the second electrode assembly 200 may be stacked on each other, so that the first electrode tab 120 and the second electrode tab 220 in the bent state may not protrude to an outside of the electrode assembly. Accordingly, an additional bending process for the protruding portion is unnecessary, and a thickness of the secondary battery may be reduced, thereby improving processability and structural stability.

The term "opposite direction to the first direction" used herein may refer to a direction in which the second uncoated portions and/or the second electrode tab 220 are bent.

In example embodiments, the first electrode tab 120 and the second electrode tab 220 is not disposed on the same line in the first direction. Accordingly, heat generation and damages of the secondary battery due to a contact between the first electrode tab 120 and the second electrode tab 220 may be prevented, and processability and reliability may be improved.

In some embodiments, the first electrode tab 120 and the second electrode tab 220 may face each other in a first diagonal direction inclined with respect to the first direction.

For example, the first diagonal direction may be a direction from a center of a first uncoated portion of the first uncoated portions 122 farthest from the second electrode assembly 200 to a center of a second uncoated portion of the second uncoated portions farthest from the first electrode assembly 100. The center of the first uncoated portion may represent a central point in a state in which the first uncoated portion is not bent, and the center of the second uncoated portion may represent a central point in a state in which the second uncoated portion is not bent.

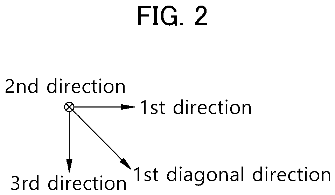

FIG. 2 is a reference view for explaining a first diagonal direction.

Referring to FIG. 2, the first diagonal direction may indicate a direction extending between the first direction and the third direction on a plane formed by the first direction and the third direction.

For example, the first diagonal direction may be inclined by 1° to 89°, 10° to 80°, or 30° to 60° with respect to the first direction.

Referring to FIG. 1 again, the secondary battery may include a current collector plate 300 that may entirely cover the first electrode tab 120 and the second electrode tab 220 to be electrically connected to the first electrode tab 120 and the second electrode tab 220.

In an embodiment, the current collector plate 300 may include a plate shape. Accordingly, a volume of the current collector plate 300 may be reduced to improve a capacity and an energy density of the secondary battery, and a contact area of the current collector plate 300 and the electrode tabs 120 and 220 may be increased to reduce a resistance of the secondary battery.

In an embodiment, a conductive metal plate may serve as the current collector plate 300.

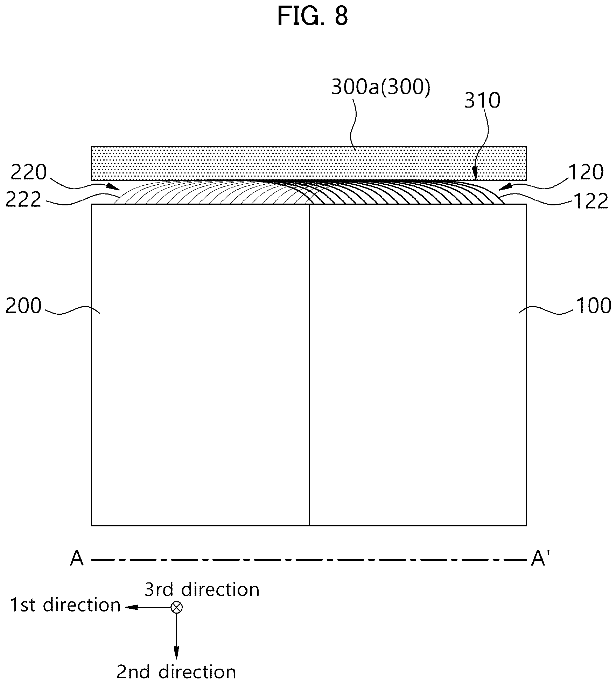

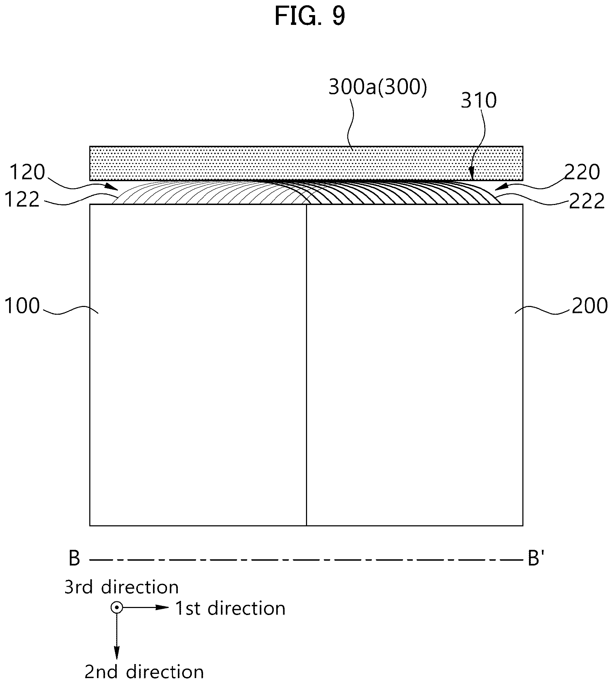

A connection structure of the current collector plate 300 and the electrode tabs 120 and 220 will be described later with reference to FIGS. 8 and 9.

In some embodiments, a length L in the first direction of each of the plurality of the first uncoated portions may be 0.5 times or less of a width W of the current collector plate 300, and a length L in the first direction of each of the plurality of the second uncoated portions may be 0.5 times or less of the width W of the current collector plate 300. In the above range, the electrode tabs 120 and 220 may not protrude to the outside of the electrode assemblies 100 and 200, the additional bending process may be omitted and a volume of the secondary battery may be reduced.

In an embodiment, the length L of each of the plurality of the first uncoated portions and the plurality of the second uncoated portions in the first direction may be from 0.01 times to 0.5 times of the width W of the current collector plate 300. Accordingly, the current collector plate 300 and the electrode tabs 120 and 220 may be stably connected to each other.

In some embodiments, a length of the first electrode tab 120 in the third direction may be 0.5 times or less, or from 0.1 times to 0.4 times of a length of the first electrode assembly 100 in the third direction. In the above range, spatial efficiency may be improved while also improving power properties of the secondary battery.

In some embodiments, a length of the second electrode tab 220 in the third direction may be 0.5 times or less, or from 0.1 times to 0.4 times of a length of the second electrode assembly 200 in the third direction. In the above range, spatial efficiency may be improved while also improving power properties of the secondary battery.

In some embodiments, a shortest distance D between the first electrode tab 120 and the second electrode tab 220 may be less than or equal to a length of the first electrode tab 120 in the third direction. In the above range, the heat generation and damages due to the contact with the electrode tabs 120 and 220 may be suppressed, and spatial efficiency of the secondary battery may be improved.

In some embodiments, the shortest distance D between the first electrode tab 120 and the second electrode tab 220 may be less than or equal to a length of the second electrode tab 220 in the third direction. In the above range, the heat generation and damages due to the contact with the electrode tabs 120 and 220 may be suppressed, and spatial efficiency of the secondary battery may be improved.

In some embodiments, a ratio of a length of the first electrode tab 120 in the first direction to a length of the second electrode tab 220 in the first direction may be in a range from 0.5 to 1.5, or from 0.8 to 1.2. In the above range, an over-current in a specific region of the secondary battery may be prevented, and life-span properties and driving stability may be improved.

In an embodiment, the length of the first electrode tab 120 in the first direction may be substantially the same as the length of the second electrode tab 220 in the first direction.

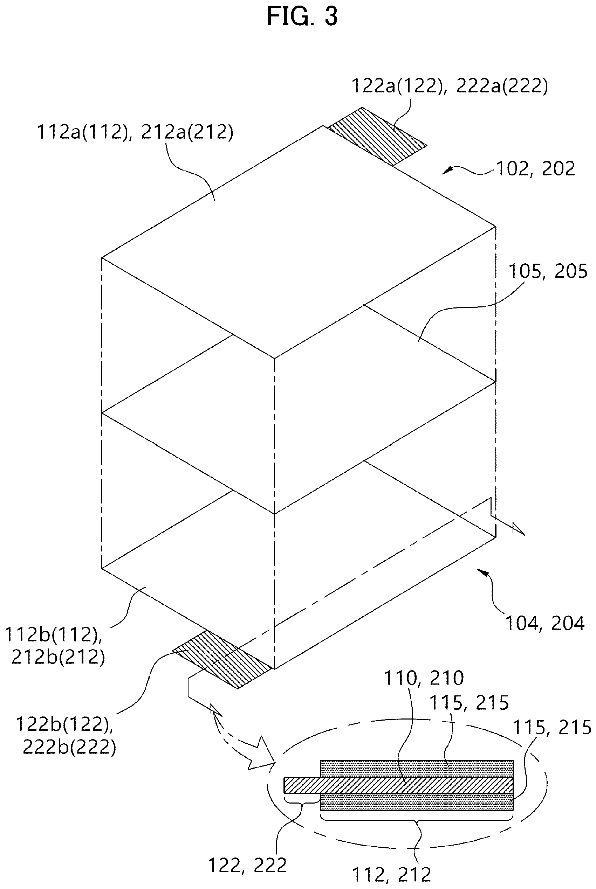

FIG. 3 is a schematic exploded perspective view of an electrode assembly in accordance with example embodiments. For example, FIG. 3 may illustrate an electrode stack structure included in the first electrode assembly 100/the second electrode assembly 200. For example, each of the first electrode assembly 100 and the second electrode assembly 200 may include a jelly roll shape in which a plurality of the electrode stack structures are repeatedly stacked. For example, the electrode assembly 150 may be formed through winding, stacking, zigzag-folding, stack-folding, etc., of separators 105 and 205.

Referring to FIG. 3, the electrode stack structure of the first electrode assembly 100 may include a first cathode 102, a first anode 104, and a first separator 105 interposed between the first cathode 102 and the first anode 104.

In example embodiments, the first cathode 102 and the first anode 104 may be alternately and repeatedly stacked with the first separator 105 interposed therebetween to define the first electrode assembly 100.

Each of the first cathode 102 and the first anode 104 may include a first coating portion 112 and the first uncoated portion 122.

The first coating portion 112 may include a first current collector 110 and a first active material layer 115 disposed on at least one surface of the first current collector 110. The first uncoated portion 122 may represent a region in which the first active material layer 115 is not disposed on the first current collector 110. The first uncoated portion 122 may extend from the first current collector 110 of the first coating portion 112 and protrude from the first coating portion 112.

In an embodiment, the first active material layer 115 may be disposed on both surfaces of the first current collector 110.

In some embodiments, a first cathode coating portion 112a and a first anode coating portion 112b may overlap each other in a direction in which the electrodes are stacked. For example, the first separator 105 may be interposed between the first cathode coating portion 112a and the first anode coating portion 112b.

In example embodiments, a first cathode uncoated portion 122a and a first anode uncoated portion 122b may protrude in opposite directions. For example, the first cathode uncoated portion 122a may protrude in one direction from the first cathode coating portion 112a, and the first anode uncoated portion 122b may protrude in a direction opposite to the one direction from the first anode coating portion 112b.

The electrode stack structure of the second electrode assembly 200 may include a second cathode 202, a second anode 204, and a second separator 205 interposed between the second cathode 202 and the second anode 204.

In example embodiments, the second cathode 202 and the second anode 204 may be alternately and repeatedly stacked with the second separator 205 interposed therebetween to define the second electrode assembly 200.

Each of the second cathode 202 and the second anode 204 may include a second coating portion 212 and a second uncoated portion 222.

The second coating portion 212 may include a second current collector 210 and a second active material layer 215 disposed on at least one surface of the second current collector 210. The second uncoated portion 222 may represent a region in which the second active material layer 215 is not disposed on the second current collector 210. The second uncoated portion 122 may extend from the second current collector 210 of the second coating portion 212 and protrude from the second coating portion 212.

In an embodiment, the second active material layer 215 may be disposed on both surfaces of the second current collector 210.

In some embodiments, a second cathode coating portion 212a and a second anode coating portion 212b may overlap each other in a direction in which the electrodes are stacked. For example, the second separator 205 may be interposed between the second cathode coating portion 212a and the second anode coating portion 212b.

In example embodiments, a second cathode uncoated region 222a and a second anode uncoated region 222b may protrude in opposite directions. For example, the second cathode uncoated portion 222a may protrude from the second cathode coating portion 212a in one direction, and the second anode uncoated portion 222b may protrude from the second anode coating portion 212b in a direction opposite to the one direction.

In example embodiments, the cathodes 102 and 202 may include a cathode current collector and a cathode active material layers disposed on at least one surface of the cathode current collector.

For example, the cathode current collector may include stainless steel, nickel, aluminum, titanium or an alloy thereof. The cathode current collector may include aluminum or stainless steel surface-treated with carbon, nickel, titanium, silver, etc. For example, a thickness of the cathode current collector may be in a range from 10 µm to 50 µm.

The cathode active material layer may include a cathode active material. For example, the cathode active material may include a compound capable of reversibly intercalating and de-intercalating lithium ions.

In example embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may have a layered structure or a crystal structure represented by Chemical Formula 1.

[Chemical Formula 1] LiₓNiₐM_{b}O_{2+z}

In Chemical Formula 1, 0.9≤x≤1.2, 0.6≤a≤0.99, 0.01≤b≤0.4, and -0.5≤z≤0.1. As described above, M may include Co, Mn and/or Al.

The chemical structure represented by Chemical Formula 1 represents a bonding relationship included in the layered structure or the crystal structure of the cathode active material, and does not exclude other additional elements. For example, M includes Co and/or Mn, and Co and/or Mn may serve as a main active element of the cathode active material together with Ni. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the layered structure/crystal structure in addition to the main active element may be further included. The auxiliary element may be incorporated into the layered structure/crystal structure to form a bond, and this case is to be understood as being included within the range of the chemical structure represented by Chemical Formula 1.

The auxiliary element may include at least one of, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may act as an auxiliary active element such as Al that contributes to capacity/power activity of the cathode active material together with Co or Mn.

For example, the cathode active material or the lithium-nickel metal oxide may include a layered structure or a crystal structure represented by Chemical Formula 1-1.

[Chemical Formula 1-1] LiₓNiₐM1_{b1}M2_{b2}O_{2+z}

In Chemical Formula 1-1, M1 may include Co, Mn and/or Al. M2 may include the above-described auxiliary element. In Chemical Formula 1-1, 0.9≤x≤1.2, 0.6≤a≤0.99, 0.01≤b1+b2≤0.4, and -0.5≤z≤0.1.

The cathode active material above may further include a doping element or a coating element. For example, elements substantially the same as or similar to the above-described auxiliary elements may be used as the doping element or the coating element. For example, the above-described elements may be used alone or in a combination of two or more therefrom as the doping element or the coating element.

The coating element or the doping element may be present on a surface of the lithium-nickel metal oxide particle, or may penetrate through the surface of the lithium-nickel metal oxide particle to be included in the bonding structure represented by Chemical Formula 1 or Chemical Formula 1-1.

The cathode active material may include a nickel-cobalt-manganese (NCM)-based lithium oxide. In this case, an NCM-based lithium oxide having an increased nickel content may be used.

Ni may be provided as a transition metal related to the power and capacity of the lithium secondary battery. Thus, as described above, a high-capacity cathode and a high-capacity lithium secondary battery may be implemented using a high-Ni composition in the cathode active material.

However, as the content of Ni increases, long-term storage stability and life-span stability of the cathode or the secondary battery may be relatively lowered, and side reactions with an electrolyte may also be increased. However, according to example embodiments, life-span stability and capacity retention properties may be improved using Mn while maintaining an electrical conductivity by Co.

The content of Ni in the NCM-based lithium oxide (e.g., a mole fraction of nickel based on the total number of moles of nickel, cobalt and manganese) may be 0.5 or more, 0.6 or more, 0.7 or more, or 0.8 or more. In some embodiments, the content of Ni may be in a range from 0.8 to 0.95, from 0.82 to 0.95, from 0.83 to 0.95, from 0.84 to 0.95, from 0.85 to 0.95, or from 0.88 to 0.95.

In some embodiments, the cathode active material may include a lithium cobalt oxide-based active material, a lithium manganese oxide-based active material, a lithium nickel oxide-based active material, or a lithium iron phosphate (LFP) active material (e.g., LiFePO₄).

In some embodiments, the cathode active material may include a Li-rich layered oxide (LLO)/OLO (Over-Lithiated Oxide)-based active material, a Mn-rich active material, a Co-less-based active material, etc., having, e.g., a chemical structure or a crystal structure represented by Chemical Formula 2.

[Chemical Formula 2] p[Li₂MnO₃] · (1-p)[Li_{q}JO₂]

In Chemical Formula 2, 0<p<1, 0.9≤q≤1.2, and J may include at least one element from Mn, Ni, Co, Fe, Cr, V, Cu, Zn, Ti, Al, Mg and B.

In example embodiments, the anodes 104 and 204 may include an anode current collector and an anode active material layer disposed on at least one surface of the anode current collector.

For example, the anode current collector may include a copper foil, a nickel foil, a stainless steel foil, a titanium foil, a nickel foam, a copper foam, a polymer substrate coated with a conductive metal, etc. A thickness of the anode current collector may be, e.g., in a range from 10 µm to 50 µm.

The anode active material layer 130 may include an anode active material.

A material capable of adsorbing and desorbing lithium ions may be used as the anode active material. For example, the anode active material may include carbon-based materials such as a crystalline carbon, an amorphous carbon, a carbon composite, a carbon fiber; a lithium metal; a lithium alloy; a silicon (Si)-containing material or a tin (Sn)-containing material, etc. These may be used alone or in a combination of two or more therefrom.

For example, the amorphous carbon may include a hard carbon, cokes, a mesocarbon microbead (MCMB), a mesophase pitch-based carbon fiber (MPCF), etc.

For example, the crystalline carbon may include natural graphite, artificial graphite, a graphitized cokes, a graphitized MCMB, a graphitized MPCF, etc.

The lithium metal may include a pure lithium metal or a lithium metal having a protective layer formed thereon for inhibiting a dendrite growth. In an embodiment, a lithium metal-containing layer deposited or coated on an anode current collector may be used as the anode active material layer. In an embodiment, a lithium thin film layer may be used as the anode active material layer.

An element capable of being included in the lithium alloy may include aluminum, zinc, bismuth, cadmium, antimony, silicon, lead, tin, gallium, indium, etc. These may be used alone or in a combination of two or more therefrom.

The silicon-containing material may provide an increased capacity. The silicon-containing material may include Si, a SiOx (0<x<2), a metal-doped SiOx (0<x<2), a siliconcarbon composite, etc.

The metal may include lithium and/or magnesium, and the metal-doped SiOx (0<x<2) may include a metal silicate.

In some embodiments, the electrode composition may further include a conductive material.

For example, the conductive material may be added to improve a conductivity and/or a mobility of lithium ions or electrons. For example, the conductive material may each independently include a carbon-based conductive material such as graphite, carbon black, acetylene black, Ketjen black, graphene, a carbon nanotube, a VGCF (vapor-grown carbon fiber), a carbon fiber, etc.; and/or a metal-based conductive material including tin, tin oxide, titanium oxide, a perovskite material such as LaSrCoO₃, LaSrMnO₃, etc. These may be used alone or in a combination of two or more therefrom.

In some embodiments, the separator 105 and 205 may prevent an electrical short circuit between the cathode 102 and 202 and the anode 104 and 204 while maintaining a flow of ions. For example, a thickness of the separator may be 10 µm to 20 µm.

For example, the separator 105 and 205 may include a porous polymer film or a porous non-woven fabric.

The porous polymer film may include a polyolefin-based polymer such as an ethylene polymer, a propylene polymer, an ethylene/butene copolymer, an ethylene/hexene copolymer, an ethylene/methacrylate copolymer, etc. These may be used alone or in a combination of two or more therefrom.

The porous non-woven fabric may include a high melting point glass fiber, a polyethylene terephthalate fiber, etc.

The separator 105 and 205 may include a ceramic-based material. For example, inorganic particles may be coated on the polymer film or dispersed in the polymer film to improve a heat resistance.

The separator 105 and 205 may have a single-layered or multi-layered structure including the polymer film and/or the non-woven fabric as described above.

The secondary battery may include a case 500 accommodating the first electrode assembly 100 and the second electrode assembly. The case 500 may be provided as at least a portion of an outer surface of the secondary battery. In an embodiment, the case 500 may include a metal. Accordingly, impact to the first electrode assembly 100 and the second electrode assembly 200 may be alleviated.

The case 500 may include an accommodating region 510 configured to accommodate the first electrode assembly 100 and the second electrode assembly 200 therein. For example, an opening may be formed at an upper surface of the case 500 so that the case 500 may be opened in the third direction. The first electrode assembly 100 and the second electrode assembly 200 may be accommodated in the accommodating region 510 through the opening.

In some embodiments, the secondary battery may include a cap plate 400 for sealing the case 500. The cap plate 400 may be assembled with the case 500. For example, the cap plate 400 and the opening of the case 500 may be assembled to seal the accommodating region 510.

For example, the cap plate 400 may include a cover 410. The cover 410 may have a plate shape. The cap plate 400 may be coupled, fastened or connected to the case 500 by the cover 410.

For example, the cap plate 400 may include an injection hole 440. The injection hole 440 may be a hole or an opening formed through the cover 410. An electrolyte solution may be injected into the case 500 through the injection hole 440.

For example, the cap plate 400 may include a vent hole 430. The vent hole 430 may be formed to penetrate the cover 410. A space at an inside of the case 500 may be limitedly connected to an outside through the vent hole 430.

For example, a vent plate may be coupled to the vent hole 430. The vent plate may be ruptured when an internal pressure of the case 500 is greater than or equal to a set pressure. Accordingly, gas at the inside of the case 500 may be discharged to an outside of the case 500, and the internal pressure of the case 500 may be reduced.

For example, the secondary battery may include an electrode terminal 420 coupled to the cap plate 400 and electrically connected to the electrode tabs 120, 130, 220 and 230. The electrode terminal 420 may be coupled to the cover 410. For example, the cover 410 may include an opening to which the electrode terminal 420 may be coupled. The opening may pass through the cover 410. The electrode terminal 420 may be electrically connected to the first electrode assembly 100 and the second electrode assembly 200 through the opening.

The electrode terminal 420 may include a cathode terminal 420a and an anode terminal 420b. The cathode terminal 420a may be electrically connected to the cathode tab. The anode terminal 420b may be electrically connected to the anode tab.

The electrode assemblies 100 and 200 may be accommodated together with the electrolyte solution in the case 500 to define a lithium secondary battery. In example embodiments, a non-aqueous electrolyte solution may be used as the electrolyte solution. For example, the non-aqueous electrolyte solution may be injected into the case 500 through the injection hole 440 of the cap plate 400.

The non-aqueous electrolyte solution may include a lithium salt as an electrolyte and an organic solvent. The lithium salt may be expressed as Li⁺X⁻, and the anion (X⁻) of the lithium salt may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), tetrahydrofuran (THF), 2-methyltetrahydrofuran, ethyl alcohol, isopropyl alcohol, dimethyl sulfoxide, acetonitrile, dimethoxyethane, diethoxyethane, sulfolane, gamma-butyrolactone, propylene sulfite, etc. These may be used alone or in a combination of two or more therefrom.

The non-aqueous electrolyte solution may further include an additive. The additive may include, e.g., a cyclic carbonate compound, a fluorine-substituted carbonate compounds, a sultone compound, a cyclic sulfate compound, a cyclic sulfite compound, a phosphate compound, a borate compounds, etc. These may be used alone or in a combination of two or more therefrom.

The cyclic carbonate compound may include vinylene carbonate (VC), vinyl ethylene carbonate (VEC), etc.

The fluorine-substituted carbonate compounds may include fluoroethylene carbonate (FEC), etc.

The sultone compound may include 1,3-propane sultone, 1,3-propene sultone, 1,4-butane sultone, etc. The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte solution. In this case, the lithium secondary battery may be manufactured in the form of an all-solid-state battery. Additionally, a solid electrolyte layer may be disposed between the cathode 102 and 202 and the anode 104 and 204 instead of the above-described separator 105 and 205.

The solid electrolyte may include a sulfide-based electrolyte. In non-limiting examples, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m, n are positive numbers, Z is Ge, Zn or Ga), Li₂S-GeS₂, Li₂S-SiS₂-Li₃PO₄, Li₂S-SiS₂-LiₚMO_{q} (p, q is a positive number, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These can be used alone or in combination of two or more therefrom.

In an embodiment, the solid electrolyte may include, e.g., an oxide-based amorphous solid electrolyte such as Li₂O-B₂O₃-P₂O₅, Li₂O-SiO₂, Li₂O-B₂O₃, Li₂O-B₂O₃-ZnO, etc.

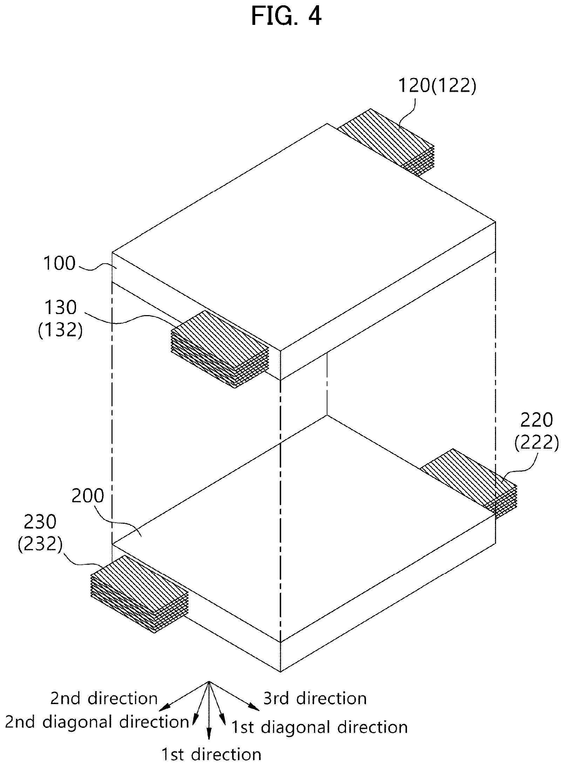

FIG. 4 is a schematic exploded perspective view of a secondary battery in accordance with example embodiments. Although FIG. 4 illustrates the electrode tabs 120, 130, 220 and 230 in the non-bent state for convenience of descriptions, but the electrode tabs 120, 130, 220 and 230 are to be interpreted as being bent in the secondary battery as described above.

Referring to FIG. 4, the first electrode assembly 100 may include the first electrode tab 120 protruding from one lateral portion of the first electrode assembly 100 and a third electrode tab 130 protruding from the other lateral portion of the first electrode assembly 100.

The third electrode tab 130 may include a plurality of third uncoated portions 132 protruding from the other lateral portion side of the first electrode assembly 100 to be bent in the first direction.

The second electrode assembly 200 may include the second electrode tab 220 protruding from one lateral portion of the second electrode assembly 200 and a fourth electrode tab 230 protruding from the other lateral portion of the second electrode assembly 200.

The fourth electrode tab 230 may include a plurality of fourth uncoated portions 232 protruding from the other lateral portion of the second electrode assembly 200 to be bent in an opposite direction of the first direction.

The first electrode assembly 100 and the second electrode assembly 200 may be stacked such that the one lateral portion of the first electrode assembly 100 and the one lateral portion of the second electrode assembly 200 are in contact with each other, and the other lateral portion of the first electrode assembly 100 and the other lateral portion of the second electrode assembly 200 are in contact with each other.

In some embodiments, the first electrode tab 120 and the third electrode tab 130 may not be disposed on the same line in the second direction perpendicular to the first direction. The second electrode tab 220 and the fourth electrode tab 230 may not be disposed on the same line in the second direction.

In some embodiments, the second electrode tab 220 and the fourth electrode tab 230 may face each other in a second diagonal direction inclined in a direction opposite to the first diagonal direction with respect to the first direction. Accordingly, the heat generation and damage of the secondary battery due to a contact between the second electrode tab 220 and the fourth electrode tab 230 may be prevented, and process reliability may be improved.

For example, the second diagonal direction may be a direction from a center of a third uncoated portion of the third uncoated portions 132 farthest from the second electrode assembly 200 to a center of a fourth uncoated portion of the fourth uncoated portions 232 farthest from the first electrode assembly 100. The center of the third uncoated portion may represent a central point in a state in which the third uncoated portion is not bent, and the center of the fourth uncoated portion may represent a central point in a state in which the fourth uncoated portion is not bent.

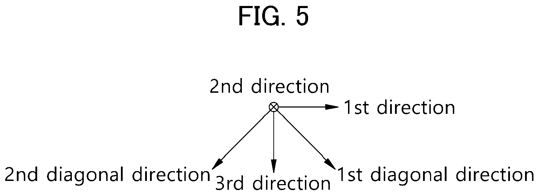

FIG. 5 is a reference view for explaining a second diagonal direction.

Referring to FIG. 5, the second diagonal direction may represent a direction symmetrical to the first diagonal direction based on the third direction on a plane defined by the first direction and the third direction.

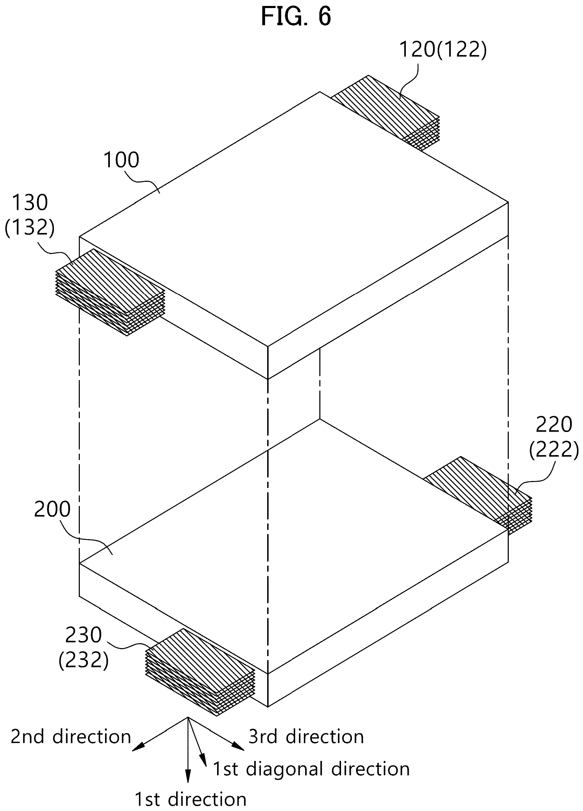

FIG. 6 is a schematic perspective view for describing a first electrode assembly and a second electrode assembly in accordance with example embodiments. Although FIG. 6 illustrates the electrode tabs 120, 130, 220 and 230 in a non-bent state for convenience of descriptions, but the electrode tabs 120, 130 220 and 230 are to be interpreted in a bent shape in the secondary battery as described above.

Referring to FIG. 6, the first electrode tab 120 and the third electrode tab 130 of the first electrode assembly 100 may be disposed on the same line in the second direction. The second electrode tab 220 and the fourth electrode tab 230 of the second electrode assembly 200 may be disposed on the same line in the second direction.

In some embodiments, the second electrode tab 220 and the fourth electrode tab 230 may face each other in the first diagonal direction. Accordingly, the heat generation and damages of the secondary battery due to a contact between the second electrode tab 220 and the fourth electrode tab 230 may be prevented, and process reliability may be improved.

In some embodiments, a length of each of the plurality of the third uncoated portions and the plurality of the fourth uncoated portions in the first direction may be 0.5 times or less of a width of the current collector plate, and may be 0.01 to 0.5 times of a width of the current collector plate in an embodiment. Accordingly, the current collector plate 300 and the electrode tabs 130 and 230 may be stably connected to each other.

In some embodiments, the first electrode tab 120 and the second electrode tab 220 may serve as cathode tabs, and the third electrode tab 130 and the fourth electrode tab 230 may serve as anode tabs.

For example, uncoated portions 122a of the cathode of the first electrode assembly 100 may be provided as the first uncoated portions, and an assembly of the first uncoated portions may be provided as the first electrode tab 120.

For example, uncoated portions 122b of the anode of the first electrode assembly 100 may be provided as the third uncoated portions, and an assembly of third the uncoated portions may be provided as the third electrode tab 130.

For example, uncoated portions 222a of the cathode of the second electrode assembly 200 may be provided as the second uncoated portions, and an assembly of the second uncoated portions may be provided as a second electrode tab 220.

For example, the uncoated portions 222b of the anode of the second electrode assembly 200 may serve as the fourth uncoated portions, and an assembly of the fourth uncoated portions may be provided as the fourth electrode tab 230.

In one embodiment, the first electrode tab 120 and the third electrode tab 130 may serve as the cathode tab and the anode tab of the first electrode assembly 100, respectively. In an embodiment, the second electrode tab 220 and the fourth electrode tab 230 may serve as the cathode tab and the anode tab of the second electrode assembly 200, respectively.

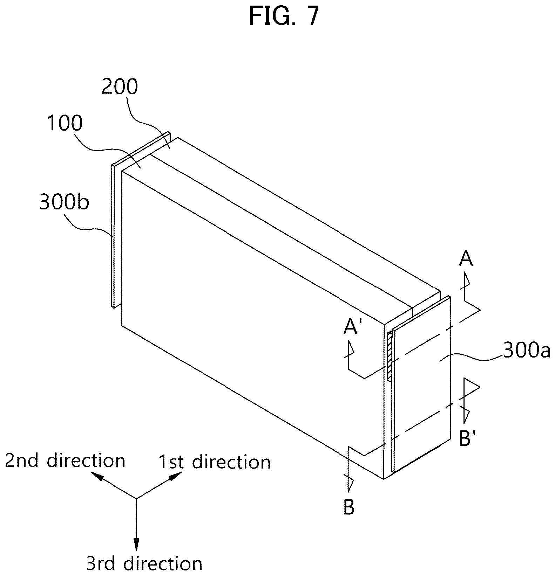

FIG. 7 is a schematic perspective view illustrating an electrode assembly and a current collector plate in accordance with example embodiments. For convenience of descriptions, illustrations of the cap plate 400 and the case 500 are omitted in FIG. 5.

Referring to FIG. 7, the current collector plates 300 may be disposed on both lateral surfaces of a stacked structure of the first and second electrode assemblies 100 and 200.

In some embodiments, the current collector plate 300 may include a first current collector plate 300a disposed on one lateral surface of the stack structure to be electrically connected to the first electrode tab 120 and the second electrode tab 220, and a second current collector plate 300b disposed on the other lateral surface of the stack structure to be electrically connected to the third electrode tab 130 and the fourth electrode tab 230.

For example, the first current collector plate 300a may serve as a cathode current collector plate. In this case, the first current collector plate 300a may be electrically connected to the cathode terminal 420a.

For example, the second current collector plate 300b may serve as am anode current collector plate. In this case, the second current collector plate 300b may be electrically connected to the anode terminal 420b.

FIG. 8 is a schematic cross-sectional view observed along a line A-A' of FIG. 7 in the third direction. FIG. 9 is a schematic cross-sectional view observed along a line B-B' of FIG. 7 in the third direction.

Referring to FIGS. 8 and 9, the first uncoated portions 122 may protrude from the one lateral portion of the first electrode assembly 100 and may be bent in the first direction. The second uncoated portions 222 may protrude from the one lateral portion of the second electrode assembly 200 and may be bent in a direction opposite to the first direction.

In some embodiments, the current collector plate 300 may be connected to top surfaces of the bent first uncoated portions 122 and top surfaces of the bent second uncoated portions 222. For example, the top surface of the first uncoated portions 122 and the current collector plate 300 may contact each other, and the top surfaces of the second uncoated portions 222 and the current collector plate 300 may contact each other.

In an embodiment, the current collector plate 300 may be disposed and pressed on the first uncoated portions 122 and the second uncoated portions 222 such that the first uncoated portions 122 may be substantially completely bent in the first direction and the second uncoated portions 222 may be substantially completely bent in the opposite direction of the first direction. Accordingly, connection stability and spatial utilization of the current collector plate 300 and the stacked structure may be improved.

In some embodiments, the current collector plate 300 may include a welded portion 310 at which the first electrode tab 120 including the first uncoated portions 122 and the second electrode tab 220 including the second uncoated portions 222 are welded.

For example, the first electrode tab 120 and the second electrode tab 220 may be in contact with the first current collector plate 300a, and may be welded by a laser welding. Accordingly, the welded portions at which the top surfaces of the first and second electrode tabs 120 and 220 and the first current collector plate 300a are welded may be formed.

For example, the third electrode tab 130 and the fourth electrode tab 230 may be in contact with the second current collector plate 300b, and may be welded by the laser welding. Accordingly, the welded portions at which the top surfaces of the third and fourth electrode tabs 130 and 230 and the second current collector plate 300b are welded may be formed.

The laser welding may include a welding commonly used in the related art. For example, the laser welding may include a fillet welding, a lap joint welding, etc.

In some embodiments, the welded portion 310 may be disposed on a surface of the current collector plate 300 adjacent to the first electrode assembly 100 and the second electrode assembly 200. Accordingly, the electrode tabs 120, 130, 220 and 230 may be entirely covered by the current collector plate 300, thereby improving process convenience, driving reliability and mechanical stability of the secondary battery.

The shape of the case 500 as illustrated in FIG. 1 is merely an example, and may be modified based on shapes and sizes of the first electrode assembly 100 and the second electrode assembly 200, and a structure of a module or a pack to which the secondary battery is applied.

## Claims

1. A secondary battery, comprising:
a first electrode assembly comprising a first electrode tab that includes a plurality of first uncoated portions bent in a first direction;
a second electrode assembly stacked on the first electrode assembly in the first direction, the second electrode assembly comprising a second electrode tab that includes a plurality of second uncoated portions bent in an opposite direction of the first direction; and
a current collector plate entirely covering the first electrode tab and the second electrode tab to be electrically connected to the first electrode tab and the second electrode tab,
wherein the first electrode tab and the second electrode tab are not disposed on the same line in the first direction.

2. The secondary battery of claim 1, wherein the first electrode tab and the second electrode tab face each other in a first diagonal direction inclined with respect to the first direction.

3. The secondary battery of any one of claims 1 and 2, wherein a length of each of the plurality of first uncoated portions and the plurality of second uncoated portions in the first direction is 0.5 times or less of a width of the current collector plate.

4. The secondary battery of any one of claims 1 to 3, wherein a ratio of a length of the first electrode tab in the first direction to a length of the second electrode tab in the first direction is from 0.5 to 1.5.

5. The secondary battery of any one of claims 1 to 4, wherein the number of the plurality of first uncoated portions included in the first electrode tab is from 5 to 100, and the number of the plurality of second uncoated portions included in the second electrode tab is 5 to 100.

6. The secondary battery of any one of claims 1 to 5, wherein a width direction of the first electrode assembly and a width direction of the second electrode assembly are the first direction, a length direction of the first electrode assembly and a length direction of the second electrode assembly are a second direction, and a height direction of the first electrode assembly and the height direction of the second electrode assembly are a third direction,
a length of the first electrode tab in the third direction is 0.5 times or less of a length of the first electrode assembly in the third direction, and
a length of the second electrode tab in the third direction is 0.5 times or less of a length of the second electrode assembly in the third direction.

7. The secondary battery of any one of claims 1 to 5, wherein a width direction of the first electrode assembly and a width direction of the second electrode assembly are the first direction, a length direction of the first electrode assembly and a length direction of the second electrode assembly are a second direction, and a height direction of the first electrode assembly and a height direction of the second electrode assembly are a third direction, and
a shortest distance between the first electrode tab and the second electrode tab is less than or equal to a length of the first electrode tab in the third direction, and the shortest distance is less than or equal to a length of the second electrode tab in the third direction.

8. The secondary battery of any one of claims 1 to 7, wherein the first electrode assembly includes the first electrode tab protruding from one lateral portion of the first electrode assembly, and a third electrode tab including a plurality of third uncoated portions protruding from the other lateral portion of the first electrode assembly to be bent in the first direction,
wherein the second electrode assembly includes the second electrode tab protruding from one lateral portion of the second electrode assembly, and a fourth electrode tab including a plurality of fourth uncoated portions protruding from the other lateral portion of the second electrode assembly to be bent in an opposite direction of the first direction.

9. The secondary battery of claim 8, wherein the first electrode tab and the third electrode tab are not disposed on the same line in a second direction perpendicular to the first direction, and
the second electrode tab and the fourth electrode tab are not disposed on the same line in the second direction.

10. The secondary battery of claim 9, wherein the first electrode tab and the second electrode tab face each other in a first diagonal direction inclined with respect to the first direction, and
the second electrode tab and the fourth electrode tab face each other in a second diagonal direction inclined in a direction opposite to the first diagonal direction with respect to the first direction.

11. The secondary battery of claim 8, wherein the first electrode tab and the third electrode tab are disposed on the same line in a second direction perpendicular to the first direction, and
the second electrode tab and the fourth electrode tab are arranged on the same line in the second direction.

12. The secondary battery of claim 11, wherein the first electrode tab and the second electrode tab face each other in a first diagonal direction inclined with respect to the first direction, and
the second electrode tab and the fourth electrode tab face each other in the first diagonal direction.

13. The secondary battery of any one of claims 8 to 12, wherein the first electrode tab and the second electrode tab are provided as a cathode tab, and the third electrode tab and the fourth electrode tab are provided as an anode tab.

14. The secondary battery of any one of claims 8 to 13, wherein a length of each of the plurality of third uncoated portions and the plurality of fourth uncoated portions in the first direction is 0.5 times or less of a width of the current collector plate.

15. The secondary battery of any one of claims 1 to 14, further comprising a welded portion at which the first electrode tab and the second electrode tab are welded to the current collector plate,
wherein the welded portion is disposed on a surface of the current collector plate adjacent to the first electrode assembly and the second electrode assembly.
